# EUROPEAN PATENT SPECIFICATION

(11) **EP 0 604 208 B1**
(45) Date of publication and mention of the grant of the patent: **19.04.2000**
(21) Application number: 93310408.5
(22) Date of filing: 22.12.1993
(51) Int. Cl.: H04B 7/08, H04B 3/06

(54) **Adaptive equalizer**
Adaptiver Entzerrer
Equilibreur adaptatif

(30) Priority: 25.12.1992 JP 34722092
(43) Date of publication of application: 29.06.1994
(73) Proprietor: NEC CORPORATION, Tokyo (JP)
(72) Inventor: Okanoue, Kazuhiro, c/o NEC Corporation, Tokyo (JP); Ushirokawa, Akihisa, c/o NEC Corporation, Tokyo (JP)
(74) Representative: Orchard, Oliver John

(56) References cited:
- EP-A- 0 052 362
- EP-A- 0 490 427
- DE-A- 4 135 495
- US-A- 4 394 768
- US-A- 5 127 025

## Description

The present invention relates generally to an adaptive equalizer, and more specifically to an adaptive equalizer enabling the deterioration of reception caused by intersymbol interference distortion and co-channel interference waves to be minimised.

Conventionally, for example, when intersymbol interference and co-channel interference waves exist, a system to improve reception using space diversity and an equalizer is known, as described in a paper entitled "Co-channel Interference Performance of Diversity Equalization in Mobile Radio" by Hitoshi YOSHINO and Hiroshi SUZUKI in 1992, at The Autumn Meeting of The Electronic Data Academic Society at B-260.

As shown in Fig. 5 of the accompanying drawings, this known system receives a plurality of signals from a plurality of antennas 500 and 510, equalizes and synthesizes these received signals in an equalizer 520, and then carries out their demodulation. By using this system, reception performance against co-channel interference waves is improved.

The improvement of reception performance against co-channel interference waves, however, is obtained by space diversity. Therefore, in this case, there is the problem that the configuration of a receiver becomes complicated by the diversity requirement.

On the other hand, in the case of equalizing signals while estimating a channel impulse response, when a co-channel interference wave exists, a channel impulse response estimator is locked to the co-channel interference wave and estimates a different channel impulse response from an actual channel impulse response. As a result, the system equalizes the received signals with the wrong channel impulse response. Therefore, there is a problem that the reception performance thereof is greatly impaired.

In the specification of United States patent number 5,127,025, which was published on June 30 1992, there was described a space diversity receiver having multiple signal paths connected respectively to antennas for multipath reception. Each signal path included a digital demodulator coupled to the antenna, and an impulse response detector, or autocorrelator connected to the demodulator for deriving a channel impulse response of each one of the multiple paths.

A maximum response detector was connected to each impulse response detector for detecting equalizable delay components which gave a maximum response value and unequalizable delay components. A power ratio of the unequalizable delay components to the equalizable delay components was derived for each signal path, and a minimum value of the power ratios was determined, and one of the signal paths in which the minimum value was detected was selected. The output signal of the demodulator of the selected signal path was applied to one input of an equalizer, or a maximum likelihood sequence estimator, and the equalizable delay components of the selected signal path were applied to the other input of the equalizer.

An object of the present invention is to offer an adaptive equalizer which minimises the above problems, while not complicating its configuration.

Another object of the present invention is to offer an adaptive equalizer which minimises distortion by intersymbol interference and the deterioration of reception preformance by co-channel interference waves, without using a diversity system.

In an arrangement to be described below there is an equalizer which includes a channel impulse response vector calculator for estimating a channel impulse response vector **h** from received signals and calculating a channel impulse response vector **h'** by removing interference components from the estimated path impulse response vector **h;** and an equalizer for inputting the received signals and the channel impulse response vector **h'**, setting an internal parameter using the channel impulse response vector **h'** and then equalizing, based on the internal parameter, the received signals. It is desirable that the adaptive equalizer should include a maximum likelihood sequence estimator.

It is desirable that the channel impulse response vector calculator should include means to input the received signals and the result of equalization of the received signals by the equalizer, to estimate the channel impulse response vector **h** using the equalization result and the received signals.

Furthermore, it is desirable that the channel impulse response vector calculator should include a channel impulse response estimator for inputting the received signals and the equalization result and estimating a channel impulse response vector **h**, and a channel impulse response convertor for inputting the channel impulse response vector **h** and converting the channel impulse response vector **h** to the channel impulse response vector **h'** from which the interference components are removed.

It is also desirable that the channel impulse response estimator should include a transversal filter.

Furthermore, it is desirable that the channel impulse response estimator should include a channel impulse response estimator circuit inputting the received signals and the equalization result and estimating the channel impulse response vector **h;** a training signal detector for detecting training signals from the input received signals; an equalization result output circuit for outputting the equalization result corresponding to the training signals; and switching means for inputting the equalization result from the equalization result output means and the equalization result of the received signals and outputting an equalization result from the equalization result output circuit to the channel impulse response estimation circuit when training signals have been detected based on a detection signal from the training signal detector, and means outputting an equalization result of the received signals to the channel impulse response estimation circuit when training signals have not been detected.

It is also desirable that the channel impulse response convertor means should include a plurality of absolute value operation means for inputting each component of the channel impulse response vector **h**, and calculating and outputting an absolute value of each component; a first maximum value detector for detecting and outputting a first maximum value among absolute values output from the plurality of absolute value operation means and specifying the absolute value operation means that has output the first maximum value; a gate for inputting absolute values output from the plurality of absolute value operation means and passing absolute values except for the first maximum value based on a specified signal from the first maximum value detector; a second maximum value detector for inputting the absolute values that have passed the gate, detecting a second maximum value among the absolute values that have passed the gate and outputting the second maximum value; a divider for inputting the first maximum value and the second maximum value and calculating the ratio between the first maximum value and the second maximum value; a weight controller for inputting the ratio calculated in the divider and the specified signal from the first maximum value detector and outputting a weight coefficient corresponding to each component of the channel impulse response vector **h**; and a plurality of multiplier means for multiplying the weight coefficient that has been output from the weight controller and each component of the channel impulse response vector **h**.

It is also desirable that the weight controller should include a weight coefficient memory for storing a plurality of weight coefficients; a selector for outputting only one weight coefficient among the plurality of weight coefficients; and a controller for inputting the specified signal from the first maximum value detector and the ratio output from the divider section and for outputting a control signal indicating a weight coefficient to be output to the selector.

Furthermore, it is desirable that the weight controller should include a threshold value memory for storing a threshold value; a weight coefficient memory section for storing two weight coefficients; a selector for outputting a weight coefficient stored in the weight coefficient memory section; a comparison circuit for comparing the threshold value and the ratio output from the divider and for outputting a comparison signal; and a controller for inputting the comparison signal and the specified signal from the first maximum value detector and outputting a control signal indicating a weight coefficient to be output to the selector.

As a result of this configuration, when transferring data via a communication path where co-channel interference waves exist and a distortion by intersymbol interference occurs, the problem that an equalizer is falsely-locked to co-channel interference waves when levels of the reception signal fall can be minimised and the reception performance can be improved without using a diversity system, thereby simplifying the configuration of the receiver.

The following description and drawings disclose, by means of examples, both the invention which is characterised in the appended claims, whose terms determine the extent of the protection conferred hereby, and a previously proposed arrangement.

In the drawings:-
Fig. 1 is a block diagram showing one embodiment,
Fig. 2 is a block diagram showing a configuration of the channel impulse response convertor section of the embodiment,
Fig. 3 is a block diagram of a weight controller of the embodiment,
Fig. 4 is a block diagram of a weight controller of another embodiment, and
Fig. 5 is a block diagram illustrating a previously proposed arrangement.

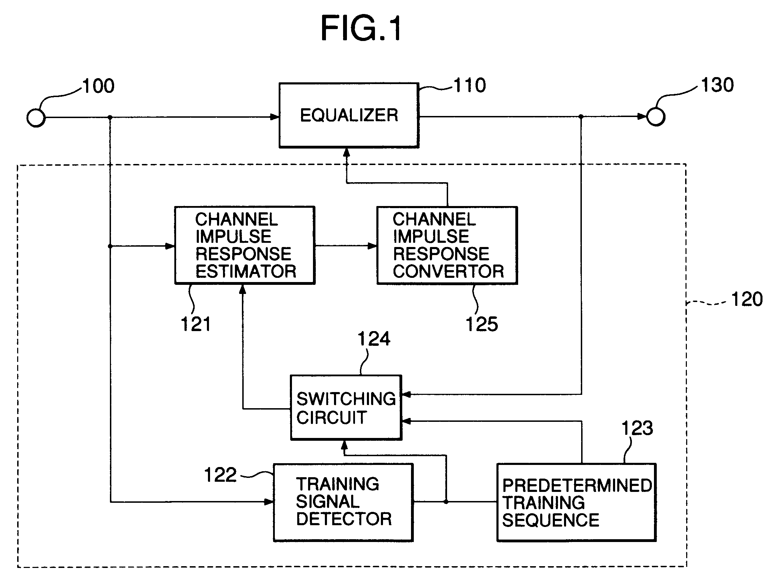

Fig. 1 is a block diagram showing an embodiment of the present invention. In this figure, 100 is an input terminal inputting reception signals, 110 is an equalizer, 120 is a channel impulse response vector calculator, 130 is an output terminal outputting equalized reception signals.

The equalizer 110 is configured by a maximum likelihood sequence estimator as shown, for example, in the paper "Digital Communications" Second Edition, 1989 by J.G.Proakis and in a U.S. Patent No. 5,127,025 "Space Diversity TDMA Receiver" by Mr. OKANOUE, one of the inventors of the present invention. In this configuration, reception signals input therein are equalized based on internal parameters. More, each internal parameter is set by each component of a channel impulse response vector **h'** described later on.

Based on reception signals and an equalization result of said reception signals, the channel impulse response vector calculator 120 calculates a channel impulse response vector **h'** consisted of N components, from which all interference components are removed.

This channel impulse response vector calculator 120 is configured by a channel impulse response estimator 121, a training signal detector 122, an training sequence generating circuit 123, switching circuit 124 and a channel impulse response convertor 125.

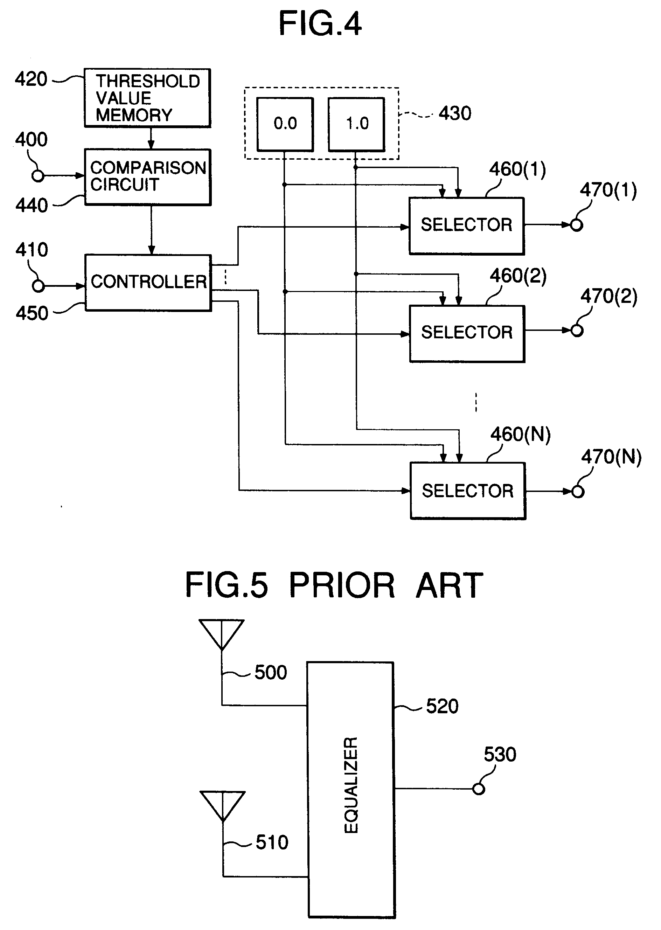

The channel impulse response estimator 121 is configured by a transversal filter as shown, for example, Fig.6.7.5 in the paper "Digital Communications" Second Edition 1989, by J.G.Proakis.

Also, it is possible to estimate a channel impulse response h by a way to estimate basing only reception signals as shown, for example, in the paper "A Study of Blind Viterbi Equalization Algorithm" by FURUYA, USHIROKAWA, ISA and SATO, A-141 for The Spring Meeting of the Electronic data and communication Academic Society, 1991. However, to estimate more accurate channel impulse response vector **h**, this invention is configured to use not only reception signals but also equalization results of reception signals and training signals.

Training signal detector 122 is configured to output a detection signal by detecting training signals in reception signals.

The training sequence generating circuit 123, which stores an equalization result of preset training signals, is configured to output the predetermind training sequence to the switching circuit 124.

The switching circuit 124 inputs an predetermined training sequence from the training sequence generating circuit 123 and another equalization result of reception signals, and outputs one of them based on a detection signal from the training signal detector 122.

By the above configuration, an predetermined trainig sequence from the training sequence generating circuit 123 in case that the training signal detector 122 has detected a training signal or an equalization result of reception signals in case that the training signal detector 122 has not detected a training signal, is input to the channel impulse response estimator 121 by selected in switching circuit 124.

Based on these equalization results, the channel impulse response estimator 121 estimates a channel impulse response h consisted of N components, then outputs it to the channel impulse response convertor 125.

Next, a configuration of the channel impulse response convertor 125 is explained.

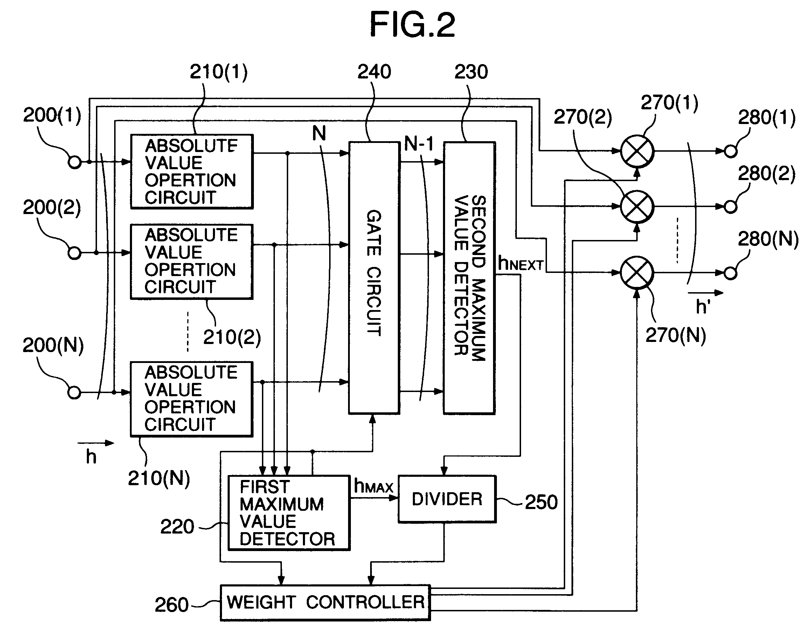

Fig.2 is a block diagram showing a configuration of the channel impulse response convertor 125. In this figure, 200(1) to 200(N) are input terminals, 210(1) to 210(N) are absolute value operation circuit, 220 is a first maximum value detector, 230 is a second maximum value detector, 240 is a gate circuit, 250 is a divider, 260 is a weight controller, 270(1) to 270(N) are multipliers and 280(1) to 280(N) are output terminals.

The channel impulse response convertor 125 removes interference components from a received channel impulse response h and converts this to a channel impulse response vector **h'**.

This channel impulse response convertor 125 is configured by input terminals 200(1) to 200(N), absolute value operation circuits 210(1) to 210(N), a first maximum value detector 220, a second maximum value detector 230, a gate circuit 240, a divider 250, a weight controller 260 and multipliers 270(1) to 270(N).

The input terminals 200(1) to 200(N) are configured to input each component of a channel impulse response h.

The absolute value operation circuits 210(1) to 210(N) are configured to input each component of the channel impulse response h through the input terminals 200(1) to 200(N), calculate each absolute value of each component and output the results to the first maximum value detector 220 and the gate circuit 240.

The first maximum value detector 220 is configured to detect the first maximum value (hₘₐₓ) among N absolute values input therein and output it to the divider 250. More, it outputs a operation circuit specification signal specifying the absolute value operation section that have output the first maximum value to the gate circuit 240 and the weight controller 260.

The gate circuit 240 is configured to gate only one absolute value that is the first maximum value (hₘₐₓ) among absolute values of respective components input therein based on the operation circuit specification signal, and output (N-1) absolute values to the second maximum value detector 230.

The maximum value detector 230 is configured to detect the largest value that is the second maximum value (h_{NEXT}) among (N-1) absolute values input therein, and output it to the divider 250.

The divider 250 is configured to calculate a ratio of the first maximum value (hₘₐₓ) and the second maximum value (h_{NEXT}) that is (hₘₐₓ/h_{NEXT}), and output the result to the weight controller 260.

The weight controller 260 is configured to calculate each weight coefficient corresponding to each component of the channel impulse response h using the ratio (hₘₐₓ/h_{NEXT}) and the operation circuit specification signal, and output the results to the multipliers 270(1) to 270(N). The configuration of the weight controller 260 is explained later in detail.

The multipliers 270(1) to 270(N) is configured to multiply each weight coefficient obtained in the weight controller 260 and each component of the channel impulse response h input through the input terminals 200(1) to 200(N), output the results to the output terminals 280(1) to 280(N).

By the channel impulse response convertor 125 thus configured, each component of the channel impulse response h is multiplied by each weight coefficient and interference components are removed, thus a channel impulse response vector **h'** is calculated. Then, the channel impulse response vector **h'** is input to the equalizer 110.

The equalizer 110 sets up internal parameters based on the channel impulse response vector **h'** input therein , and equalizes reception signals using the internal parameters.

Next, the configuration of the weight controller 260 mentioned above is explained in detail.

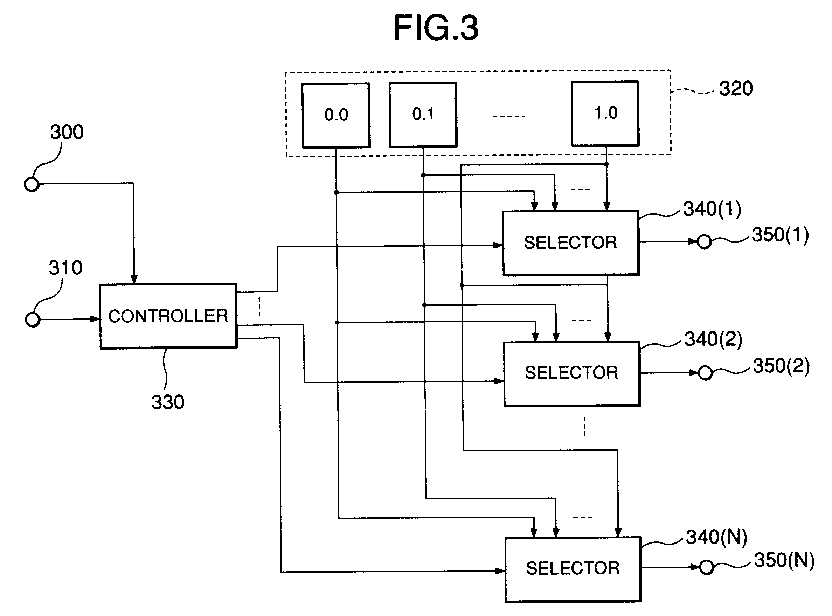

Fig.3 is a block diagram of the weight controller 260. In this figure, 300 and 310 are input terminals, 320 is a weight coefficient memory, 330 is a controller, 340(1) to 340(N) are selectors and 350(1) to 350(N) are output terminals.

The input terminal 300 inputs the ratio (hₘₐₓ/h_{NEXT}) from the divider 250, the input terminal 310 inputs an operation circuit specification signal from the first maximum value detector 220.

The weight coefficient memory 320 is configured to store a plurality of weight -coefficient and output these weight coefficients to the selectors 340(1) to 340(N).

The controller 330 is configured to estimate interference components based on the ratio (hₘₐₓ/h_{NEXT}) input therein and output a control signal to the selectors 340(1) to 340(N) based on the operation circuit specification signal.

The selectors 340(1) to 340(N) are configured to output, based on the control signal from the controller 330, only one weight coefficient among weight coefficients input therein.

Next, the operation of the weight controller 260 thus configured is explained.

The controller 330 estimates magnitude of interference components based on the ratio (hₘₐₓ/h_{NEXT}) input therein. That is, it decides that interference components are small when the ratio (hₘₐₓ/h_{NEXT}) is large, or it decides that interference components are large when the ratio (hₘₐₓ/h_{NEXT}) is small. On the other hand, it specifies, based on the operation circuit specification signal, a selector to be input the first maximum value (hₘₐₓ).

Then, the controller outputs a control signal that indicates the selector to output the maximum value among the weight coefficients input from the weight controller 330. Additionally, it outputs a control signal that indicates each selector to output the smaller value among the weight coefficients input from the weight controller 330 when the ratio (hₘₐₓ/h_{NEXT}) is large or the larger value among the weight coefficients input from the weight controller 330 when the ratio (hₘₐₓ/h_{NEXT}) is small.

Thus, the respective weight coefficients corresponding to respective components of the channel impulse response h are output from the output terminals 350(1) to 350(N) and input to the multipliers 270(1) to 270(N).

Next, another embodiment of the weight controller 260 is explained.

Fig.4 is a block diagram showing another embodiment of the weight controller 260.

In this figure, 400 and 410 are input terminals, 420 is a threshold value memory, 430 is a weight coefficient memory, 440 is a comparison circuit, 450 is a controller, 460(1) to 460(N) are selectors and 470(1) to 470(N) are output terminals.

The input terminal 400 inputs the ratio (hₘₐₓ/h_{NEXT}) from the divider 250, the input terminal 410 inputs the operation circuit specification signal from the first maximum value detector 220.

The threshold value memory 420 is configured to store a preset threshold value and output it to the comparison circuit 440.

The weight coefficient memory 430 is configured to store 1 and 0 as weight coefficients, output them to the selectors 460(1) to 460(N).

The comparison circuit 440 is configured to compare the threshold value and the ratio (hₘₐₓ/h_{NEXT}) input from the divider 250 through the input terminal 400, output the comparison result to the controller 450.

The controller 450 is configured to output, based on the comparison result and the operation circuit specification signal from the first maximum value detector 220, a control signal to the selectors 460(1) to 460(N).

Next, the operation of the weight controller 260 thus configured is explained.

Firstly , the controller 450 compares a ratio (hₘₐₓ/h_{NEXT}) and a threshold value.

Then, it decides that interference components are small when the ratio (hₘₐₓ/h_{NEXT}) is larger than the threshold value and outputs a control signal that indicates to output a weight coefficient not to convert each component of the channel impulse response h, that is 1, to the selectors 460(1) to 460(N).

On the other hand, it decides that interference components are large when the ratio (hₘₐₓ/h_{NEXT}) input therein is smaller than the threshold value, outputs, based on the operation circuit specification signal, a control signal that indicates to output the weight coefficient 1 to a selector corresponding to the specified absolute operation and the weight coefficient 0 to the other selectors.

The selectors 460(1) to 460(N) input the control signal, based on the control signal, outputs a weight coefficient corresponding to each component of the channel impulse response **h** to the output terminals 470(1) to 470(N).

Then, the weight coefficients output from the weight controller 260 configured as above are input to the multipliers 270(1) to 270(N).

Although the invention has been described, by way of example, with reference to particular embodiments, it will be appreciated that variations and modifications thereof, as well as other embodiments may be made within the scope of the appended claims.

## Claims

1. An adaptive equalizer including a channel impulse response vector calculator (120) having an estimator (121) for estimating a channel impulse response vector **h** from received signals; and an equalizer (110) to an input of which the received signals are applied characterised in that there are provided means for removing interference components (125) from the estimated impulse response vector **h** to provide a channel impulse response vector **h'**, and in that the channel impulse response vector **h'** from which the interference components have been removed is connected to an input of the equalizer (110), and in that means (122-125) are provided for setting an internal parameter of the equalizer (110) using the channel impulse response vector **h'**, the received signals being equalized in the equalizer (110) on the basis of the internal parameter to produce an equalization result.

2. An adaptive equalizer as claimed in claim 1, wherein the equalizer (110) is a maximum likelihood sequence estimator.

3. An adaptive equalizer as claimed in either claim 1 or claim 2 wherein the means (122-125) for setting the internal parameter of the equalizer (110) includes a channel impulse response convertor (125) to which the channel impulse response vector **h** is input.

4. An adaptive equalizer as claimed in claim 3, wherein the channel impulse response estimator (121) includes a transversal filter.

5. An adaptive equalizer as claimed in claim 3, including a training signal detector (122) for detecting training signals from the received signals, a training sequence generating circuit (123) for storing an equalization result output corresponding to the training signals, and switching means (124) to which the equalization result is input, and from which the equalization result output corresponding to the training signals is output to the channel impulse response estimator (121) when training signals have been detected based on a detection signal from the training signal detector (122), an equalisation result of the received signals being output to the channel impulse response estimator (121) when training signals have not been detected.

6. An adaptive equalizer as claimed in claim 3, wherein the channel impulse response convertor (125) includes a plurality of absolute value operation input means (200(1) to 200(N)) for inputting each component of the channel impulse response vector **h**, absolute value operation means (210(1) to 210(N)) for calculating and outputting an absolute value of each component, a first maximum value detector (220) for detecting and outputting a first maximum value among absolute values output from the plurality of the absolute value operation means (210(1) to 210(N)) and for specifying the absolute value operation means (210(1) to 210(N)) that has output the first maximum value, a gate (240) for inputting absolute values output from the plurality of absolute value operation means (210(1) to 210(N)) and passing absolute values except for the first maximum value based on a specification signal from the first maximum value detector (220), a second maximum value detector (230) for inputting the absolute values that have passed the gate (240) and for detecting and outputting a second maximum value from among the absolute values that have passed the gate (240), a divider (250) for inputting the first maximum value and the second maximum value and for calculating the ratio between the first maximum value and the second maximum value, a weight controller (260) for inputting the ratio calculated in the divider (250) and a specified signal from the first maximum value detector (220), and for outputting a weight coefficient corresponding to each component of the channel impulse response vector **h**, and a plurality of multiplier means (270(1) to 270(N)) for multiplying the weight coefficient that has been output from the weight controller (260) and each component of the channel impulse response vector **h**.

7. An adaptive equalizer as claimed in claim 6, wherein the weight controller (260) includes a weight coefficient memory (430) for storing a plurality of weight coefficients, a selector (460(1) to 460(N)) for outputting only one weight coefficient among the plurality of weight coefficients, and a controller (450) for inputting a specified signal from the first maximum value detector (220) and the ratio output from the divider (250) and for outputting a control signal indicating a weight coefficient to be output to the selector (460(1) to 460(N)).

8. An adaptive equalizer as claimed in claim 6, wherein the weight controller (260) includes a threshold value memory (420) for storing a threshold value, a weight coefficient memory (430) for storing two weight coefficients, a selector (460(1) to 460(N)) for outputting a weight coefficient stored in the weight coefficient memory (430), a comparison circuit (440) for comparing the threshold value and the ratio output from the divider (250) and outputting a comparison signal, and a controller (450) for inputting the comparison signal and a specified signal from the first maximum value detector (220) and outputting a control signal indicating a weight coefficient to be output to the selector (460(1) to 460(N)).

## Patentansprüche

1. Adaptiver Entzerrer mit einer Kanalimpulsantwortvektorberechnungseinrichtung (120) mit einer Schätzeinrichtung (121) zum Schätzen eines Kanalimpulsantwortvektors **h** aus empfangenen Signalen; und einem Entzerrer (110), an dessen Eingang die empfangenen Signale angelegt werden, dadurch gekennzeichnet, daß eine Einrichtung zum Entfernen von Interferenzkomponenten (125) aus dem geschätzten Impulsantwortvektor **h** bereitgestellt wird, um einen Kanalimpulsantwortvektor **h**' bereitzustellen, und daß der Kanalimpulsantwortvektor **h**', aus dem die Interferenzkomponenten entfernt worden sind, mit einem Eingang des Entzerrers (110) verbunden ist und daß Einrichtungen (122-125) zum Einstellen eines internen Parameters des Entzerrers (110) unter Verwendung des Kanalimpulsantwortvektors **h**' bereitgestellt werden, wobei die empfangenen Signale im Entzerrer (110) auf der Grundlage des internen Parameters entzerrt werden, um ein Entzerrungsresultat zu erzeugen.

2. Adaptiver Entzerrer nach Anspruch 1, wobei der Entzerrer (110) eine Maximum-Likelihood-Sequenzschätzeinrichtung ist.

3. Adaptiver Entzerrer nach Anspruch 1 oder 2, wobei die Einrichtungen (122-125) zum Einstellen des internen Parameters des Entzerrers (110) einen Kanalimpulsantwortumsetzer (125) aufweisen, in den der Kanalimpulsantwortvektor **h** eingegeben wird.

4. Adaptiver Entzerrer nach Anspruch 3, wobei die Kanalimpulsantwortsohätzeinrichtung (121) ein Transversalfilter aufweist.

5. Adaptiver Entzerrer nach Anspruch 3, mit einem Trainingssignaldetektor (122) zum Detektieren von Trainingssignalen aus den empfangenen Signalen, einer Trainingssequenzerzeugungsschaltung (123) zum Speichern eines entsprechend den Trainingssignalen ausgegebenen Entzerrungsergebnisses und einer Schalteinrichtung (124), in die das Entzerrungsergebnis eingegeben und aus der das entsprechend den Trainingssignalen ausgegebene Entzerrungsergebnis an die Kanalimpulsantwortschätzeinrichtung (121) ausgegeben wird, wenn Trainingssignale auf der Grundlage eines Detektionssignals vom Trainingssignaldetektor (122) detektiert worden sind, wobei ein Entzerrungsergebnis der empfangenen Signale an die Kanalimpulsantwortschätzeinrichtung (121) ausgegeben wird, wenn keine Trainingssignale detektiert worden sind.

6. Adaptiver Entzerrer nach Anspruch 3, wobei der Kanalimpulsantwortumsetzer (125) aufweist: mehrere Absolutwertoperationseingabeeinrichtungen (200(1) bis 200(N)) zum Eingeben jeder Komponente des Kanalimpulsantwortvektors **h**, Absolutwertoperationseinrichtungen (210(1) bis 210(N)) zum Berechnen und Ausgeben eines absoluten Wertes jeder Komponente, einen ersten Maximalwertdetektor (220) zum Detektieren und Ausgeben eines ersten maximalen Wertes unter absoluten Werten, die von den mehreren dem Absolutwertoperationseinrichtungen (210(1) bis (210(N)) ausgegeben werden, und zum Festlegen der Absolutwertoperationseinrichtung (210(1) bis 210(N)), die den ersten Maximalwert ausgegeben hat, ein Gatter (240) zum Eingeben von absoluten Werten, die von den mehreren Absolutwertoperationseinrichtungen (210(1) bis 210(N)) ausgegeben werden, und Durchlassen von absoluten Werten mit Ausnahme des ersten maximalen Wertes auf der Grundlage eines Festlegungssignals vom ersten Maximalwertdetektor (220), einen zweiten Maximalwertdetektor (230) zum Eingeben der absoluten Werte, die das Gatter (240) passiert haben, und zum Detektieren und Ausgeben eines zweiten Maximalwetes unter den absoluten Werten, die das Gatter (240) passiert haben, einen Teiler (250) zum Eingeben des ersten Maximalwertes und des zweiten Maximalwertes und zum Berechnen des Verhältnisses zwischen dem ersten Maximalwert und dem zweiten Maximalwert, einen Gewichtscontroller (260) zum Eingeben des Verhältnisses, das in dem Teiler (250) berechnet wird, und eines festgelegten Signals aus dem ersten Maximalwertdetektor (220) und zum Ausgeben eines Gewichtskoeffizienten entsprechend jeder Komponente des Kanalimpulsantwortvektors **h** und mehrere Multiplizierereinrichtungen (270(1) bis 270(N)) zum Multiplizieren des Gewichtskoeffizienten, der vom Gewichtscontroller (260) ausgegeben worden ist, und jeder Komponente des Kanalimpulsantwortvektors **h**.

7. Adaptiver Entzerrer nach Anspruch 6, wobei der Gewichtscontroller (260) aufweist: einen Gewichtskoeffizientenspeicher (430) zum Speichern mehrerer Gewichtskoeffizienten, einen Selektor (460(1) bis 460(N)) zum Ausgeben nur eines Gewichtskoeffizienten unter den mehreren Gewichtskoeffizienten und einen Controller (450) zum Eingeben eines festgelegten Signals aus dem ersten Maximalwertdetektor (220) und des vom Teiler (250) ausgegebenen Verhältnisses und zum Ausgeben eines Steuersignals, das einen Gewichtskoeffizienten anzeigt, der an den Selektor (460(1) bis 460(N)) auszugeben ist.

8. Adaptiver Entzerrer nach Anspruch 6, wobei der Gewichtscontroller (260) aufweist: einen Schwellwertspeicher (420) zum Speichern eines Schwellwertes, einen Gewichtskoeffizientenspeicher (430) zum Speichern von zwei Gewichtskoeffizienten, einen Selektor (460(1) bis 460(N)) zum Ausgeben eines im Gewichtskoeffizientenspeicher (430) gespeicherten Gewichtskoeffizienten, eine Vergleichsschaltung (440) zum Vergleichen des Schwellwertes und des vom Teiler (250) ausgegebenen Verhältnisses und Ausgeben eines Vergleichssignals und einen Controller (450) zum Eingeben des Vergleichssignals und eines festgelegten Signals aus dem ersten Maximalwertdetektor (220) und Ausgeben eines Steuersignals, das einen Gewichtskoeffizienten anzeigt, der an den Selektor (460(1) bis 460(N)) auszugeben ist.

## Revendications

1. Egaliseur adaptatif incluant un calculateur vectoriel de réponse impulsionnelle de canal (120) ayant un dispositif d'estimation (121) pour estimer un vecteur de réponse impulsionnelle de canal h à partir de signaux reçus, et un égaliseur (110) dans une entrée duquel les signaux reçus sont appliqués, caractérisé en ce que des moyens sont fournis pour éliminer des composantes d'interférence (125) du vecteur de réponse impulsionnelle estimé h pour fournir un vecteur de réponse impulsionnelle de canal h', et en ce que le vecteur de réponse impulsionnelle de canal h' à partir duquel ont été éliminées les composantes d'interférence est relié à une entrée de l'égaliseur (110), et en ce que des moyens (122-125) sont fournis pour établir un paramètre interne de l'égaliseur (110) en utilisant le vecteur de réponse impulsionnelle de canal h', les signaux reçus étant égalisés dans l'égaliseur (110) sur la base du paramètre interne pour produire un résultat d'égalisation.

2. Egaliseur adaptatif selon la revendication 1, dans lequel l'égaliseur (110) est un dispositif d'estimation de séquence probabiliste maximale.

3. Egaliseur adaptatif selon la revendication 1 ou 2, dans lequel les moyens (122-125) pour établir le paramètre interne de l'égaliseur (110) comportent un convertisseur de réponse impulsionnelle de canal (125) dans lequel est entré le vecteur de réponse impulsionnelle de canal h.

4. Egaliseur adaptatif selon la revendication 3, dans lequel le dispositif d'estimation de réponse impulsionnelle de canal (121) inclut un filtre transversal.

5. Egaliseur adaptatif selon la revendication 3, comportant un détecteur de signaux d'apprentissage (122) pour détecter des signaux d'apprentissage à partir des signaux reçus, un circuit générant une séquence d'apprentissage (123) pour mémoriser une sortie de résultat d'égalisation correspondant aux signaux d'apprentissage, et des moyens de commutation (124) dans lesquels est entré le résultat d'égalisation, et à partir desquels la sortie de résultat d'égalisation correspondant aux signaux d'apprentissage est émise dans le dispositif d'estimation de réponse impulsionnelle de canal (121) lorsque des signaux d'apprentissage ont été détectés sur la base d'un signal de détection provenant du détecteur de signaux d'apprentissage (122), et un résultat d'égalisation des signaux reçus étant émis dans le dispositif d'estimation de réponse impulsionnelle de canal (121) lorsqu'aucun signal d'apprentissage n'a été détecté.

6. Egaliseur adaptatif selon la revendication 3, dans lequel le convertisseur de réponse impulsionnelle de canal (125) comporte une pluralité de moyens d'entrée d'opération de valeur absolue (200(1) à 200(N)) pour entrer chaque composante du vecteur de réponse impulsionnelle de canal h, des moyens d'opération de valeur absolue (210(1) à 210(N)) pour calculer et émettre une valeur absolue de chaque composante, un premier détecteur de valeur maximale (220) pour détecter et émettre une première valeur maximale parmi les valeurs absolues émises par la pluralité des moyens d'opération de valeur absolue (210(1) à 210(N)) et pour spécifier les moyens d'opération de valeur absolue (210(1) à 210 (N)) qui ont émis la première valeur maximale, une porte (240) pour entrer des valeurs absolue émises par la pluralité de moyens d'opération de valeur absolues (210(1) à 210(N)) et laisser passer des valeurs absolues à l'exception de la première valeur absolue maximale sur la base du signal de spécification provenant du premier détecteur de valeur maximale (220), un second détecteur de valeur maximale (230) pour entrer les valeurs absolues qui sont passées par la porte (240) et pour détecter et émettre une seconde valeur maximale parmi les valeurs absolues qui sont passées par la porte (240), un diviseur (250) pour entrer la première valeur maximale et la seconde valeur maximale et pour calculer le rapport entre la première valeur maximale et la seconde valeur maximale, un contrôleur de pondération (260) pour entrer le rapport calculé dans le diviseur (250) et un signal spécifié provenant du premier détecteur de valeur maximale (220), et pour émettre un coefficient de pondération correspondant à chaque composante du vecteur de réponse impulsionnelle de canal h, et une pluralité de moyens multiplicateurs (270(1) à 270(N)) pour multiplier le coefficient de pondération qui a été émis par le contrôleur de pondération (260) et chaque composante du vecteur de réponse impulsionnelle de canal h.

7. Egaliseur adaptatif selon la revendication 6, dans lequel le contrôleur de pondération (260) comporte une mémoire de coefficients de pondération (430) pour mémoriser une pluralité de coefficients de pondération, un sélecteur (460(1) à 460(N)) pour émettre uniquement un coefficient de pondération parmi la pluralité de coefficients de pondération, et un contrôleur (450) pour entrer un signal spécifié par le premier détecteur de valeur maximale (220) et le rapport émis par le diviseur (250) et pour émettre un signal de commande indiquant un coefficient de pondération à émettre dans le sélecteur (460(1) à 460(N)).

8. Egaliseur adaptatif selon la revendication 6, dans lequel le contrôleur de pondération (260) comporte une mémoire de valeur de seuil (420) pour mémoriser une valeur de seuil, une mémoire de coefficients de pondération (430) pour mémoriser deux coefficients de pondération, un sélecteur (460(1) à 460(N)) pour émettre un coefficient de pondération mémorisé dans la mémoire de coefficients de pondération (430), un circuit de comparaison (440) pour comparer la valeur de seuil et le rapport émis par le diviseur (250) et émettre un signal de comparaison, et un contrôleur (450) pour entrer le signal de comparaison et un signal spécifié provenant du premier détecteur de valeur maximale (220) et émettre un signal de commande indiquant un coefficient de pondération à émettre dans le sélecteur (460(1) à 460(N)).
